# EUROPEAN PATENT SPECIFICATION

(11) **EP 4 124 166 B1**
(45) Date of publication and mention of the grant of the patent: **08.01.2025**
(21) Application number: 21770807.2
(22) Date of filing: 12.03.2021
(51) Int. Cl.: H04W 76/40, H04W 4/06, H04W 48/08

(54) **APPARATUS AND METHOD FOR PROCESSING BROADCAST SERVICE CONFIGURATION INFORMATION IN WIRELESS COMMUNICATION SYSTEM**
VORRICHTUNG UND VERFAHREN ZUR VERARBEITUNG VON RUNDFUNKDIENSTKONFIGURATIONSINFORMATIONEN IN EINEM DRAHTLOSEN KOMMUNIKATIONSSYSTEM
APPAREIL ET PROCÉDÉ DE TRAITEMENT D'INFORMATIONS DE CONFIGURATION DE SERVICE DE DIFFUSION DANS UN SYSTÈME DE COMMUNICATION SANS FIL

(30) Priority: 20.03.2020 KR 20200034670
(43) Date of publication of application: 25.01.2023
(73) Proprietor: Samsung Electronics Co., Ltd., Gyeonggi-do 16677 (KR)
(72) Inventor: KANG, Hyunjeong, Suwon-si, Gyeonggi-do 16677 (KR); KIM, Soenghun, Suwon-si, Gyeonggi-do 16677 (KR)
(74) Representative: Nederlandsch Octrooibureau
(86) International application number: PCT/KR2021/003085
(87) International publication number: WO 2021/187811

(56) References cited:
- WO-A1-2017/082660
- CN-A- 104 918 204
- KR-B1- 101 820 884
- US-A1- 2013 044 668
- US-A1- 2018 132 179
- US-A1- 2019 182 632
- "Methods and Apparatus for LTE Single Cell Point to Multipoint Transmission (SC-PTM) Operations ED - Darl Kuhn", IP.COM, IP.COM INC., WEST HENRIETTA, NY, US, 22 December 2017 (2017-12-22), XP013177107, ISSN: 1533-0001
- ANONYMOUS: "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.8.0, 8 January 2020 (2020-01-08), Mobile Competence Centre ; 650, route des Lucioles ; F-06921 Sophia-Antipolis Cedex ; France, pages 1 - 532, XP051860598

## Description

### TECHNICAL FIELD

The present disclosure relates methods and apparatuses for processing broadcasting service configuration information of a terminal in a wireless communication system.

### BACKGROUND ART

To meet demand due to ever-increasing wireless data traffic after commercialization of the 4^{th} generation (4G) communication system, there have been efforts to develop an advanced 5^{th} generation (5G) system or pre-5G communication system. For this reason, the 5G or pre-5G communication system is also called a beyond 4G network communication system or post long term evolution (LTE) system.

Implementation of the 5G communication system using ultra-frequency millimeter wave (mmWave) bands, e.g., 60GHz bands, is considered to achieve higher data rates. To reduce pathloss of radio waves and to increase a transmission range of radio waves in the ultra-frequency bands, beamforming, massive multiple-input multiple-output (MIMO), full dimensional MIMO (FD-MIMO), array antenna, analog beamforming, and large-scale antenna techniques are under discussion in the 5G communication system.

Also, in order to improve system networks, for 5G communication systems, technologies such as evolved small cell, advanced small cell, cloud radio access network (cloud RAN), ultra-dense network, device-to-device (D2D) communication, wireless backhaul, moving network, cooperative communication, coordinated multi-points (CoMP), and interference cancellation have been developed.

Also, for 5G communication systems, advanced coding modulation (ACM) schemes such as hybrid frequency-shift keying (FSK) and quadrature amplitude modulation (QAM) modulation (FQAM) and sliding window superposition coding (SWSC) and enhanced network access schemes such as filter-bank multi-carrier (FBMC), non-orthogonal multiple access (NOMA), and sparse code multiple access (SCMA) have been developed.

The Internet has evolved from a human-based connection network, where humans create and consume information, to the Internet of things (IoT), where distributed elements such as objects exchange information with each other to process the information. Internet of everything (IoE) technologies in which big data processing technologies, etc. based on connection with a cloud server, etc. are combined with the IoT technologies have also emerged. To implement the IoT, technological elements, such as a sensing technology, a wired/wireless communication and network infrastructure, a service interface technology, and a security technology, are required, and thus, recently, techniques for connection between things, such as a sensor network, machine-to-machine (M2M) communication, machine-type communication (MTC), etc., have been studied. In an IoT environment, intelligent Internet technology (IT) services that create new values in human life by collecting and analyzing data generated among connected things, may be provided. The IoT may be applied to a variety of areas, such as smart homes, smart buildings, smart cities, smart cars or connected cars, smart grid, health care, smart home appliances and advanced medical services through convergence and combination between existing Information Technologies (IT) and various industrial applications.

Thus, various attempts have been made to apply the 5G communication system to an IoT network. For example, technologies such as sensor network, M2M communication, and MTC are implemented by 5G communication technologies such as beamforming, MIMO, and array antenna. As described above, that the cloud RAN may be applied as the big data processing technology may also be regarded as an example of the convergence between the 5G technology and the IoT technology.

Patent document CN 104918204 A, published on 16 September 2015, discloses a unicast and multicast conversion control method in LTE. The method comprises the following steps that user equipment receives a GC service through multicast or unicast; when the UE is moved to a purpose cell from a source cell, the movement between the two cells needs switching between the cells; if modes of sending the GC service received by the UE by the source cell and the purpose cell of the UE are different, the UE carries out switching between the cells and simultaneously needs to carry out switching between a unicast mode and a multicast mode.

Document "Methods and Apparatus for LTE Single Cell Point to Multipoint Transmission (SC-PTM) Operations ED - Dari Kuhn(IP.COM, IP.COM INC., WEST HENRIETTA, NY, US)", published on 22 December 2017, discloses methods and apparatus for LTE Single Cell Point to Multipoint Transmission (SC-PTM) Operations.

Patent document US 2013/0044668 A1, published on 21 February 2013, discloses a method for a UE to receive a MDMS. The method includes, when the UE initiates a handover from a first cell that is providing the MBMS, the UE adding a TMGI associated with the MBMS service to a message sent from the UE to an access node in the first cell.

### DESCRIPTION OF EMBODIMENTS

### TECHNICAL PROBLEM

The present disclosure provides apparatuses and methods by which a terminal obtains broadcasting service information and reports broadcasting service information of interests of the terminal in a communication system. The invention is defined by the independent claims. Advantageous embodiments of the invention are given in the sub-claims.

Also, the present disclosure provides apparatuses and methods by which a terminal obtains and processes radio bearer configuration control information transmitting a broadcasting service packet.

### BRIEF DESCRIPTION OF THE DRAWINGS

FIG. 1 illustrates a wireless communication system according to an embodiment of the present disclosure.
FIG. 2 illustrates a configuration of a base station in a wireless communication system according to an embodiment of the present disclosure.
FIG. 3 illustrates a configuration of a terminal in a wireless communication system according to an embodiment of the present disclosure.
FIG. 4 illustrates a configuration of a communicator in a wireless communication system according to an embodiment of the present disclosure.
FIG. 5 illustrates a structure of a radio time-frequency resource in a wireless communication system according to an embodiment of the present disclosure.
FIG. 6A is a diagram of an operation of processing a system information block (SIB) message including broadcasting service configuration information, according to an embodiment of the present disclosure.
FIG. 6B illustrates an operation, performed by a terminal, of processing an SIB message including broadcasting service configuration information, according to an embodiment of the present disclosure.
FIG. 6C is a diagram of an operation of processing a short message including broadcasting service configuration information, according to an embodiment of the present disclosure.
FIG. 7A illustrates a signal flow between a terminal and a base station performing a radio resource control (RRC) connection configuration procedure for processing broadcasting service configuration information, according to an embodiment of the present disclosure.
FIG. 7B illustrates a signal flow between a terminal and a base station processing a radio bearer configuration procedure of a broadcasting service, according to an embodiment of the present disclosure.
FIG. 8 illustrates an operation, performed by a terminal, of processing security context configuration information of a radio bearer, according to an embodiment of the present disclosure.
FIG. 9A illustrates a signal flow between a terminal and a base station performing a counter check procedure of a broadcasting service, according to an embodiment of the present disclosure.
FIG. 9B illustrates an operation, performed by a terminal, of performing a counter check procedure with respect to a radio bearer, according to an embodiment of the present disclosure.
FIG. 9C illustrates an operation, performed by a terminal, of performing a counter check procedure of a broadcasting service, according to an embodiment of the present disclosure.

### BEST MODE

According to an embodiment of the present disclosure, a terminal for processing broadcasting service configuration information in a wireless communication system includes a transceiver, and at least one processor configured to receive, from a base station, first multicast broadcast service (MBS) system information including broadcasting service list information, identify, based on the received first MBS system information, whether an MBS service in which the terminal is interested is included in the broadcasting service list information, when the MBS service in which the terminal is interested is included in the broadcasting service list information, perform a procedure of establishing a connection with the base station, and when the MBS service in which the terminal is interested is not included in the broadcasting service list information, monitor a first message in a paging occasion period.

The broadcasting service list information may include temporary mobile group identity (TMGI) information and session identifier information with respect to each of broadcasting services, wherein the TMGI information may include at least one of a public land mobile network (PLMN) identifier with respect to a broadcasting service corresponding to the terminal or an identifier of the broadcasting service corresponding to the terminal.

The at least one processor may further be configured to obtain the first message in the paging occasion, identify whether each of a system information change indicator and an MBS system information update indicator included in the first message indicates true or false, when the MBS system information update indicator indicates true, receive first system information in a first period and, based on the first system information received in the first period, receive second MBS system information, and when the system information change indicator included in the first message indicates true, and the MBS system information update indicator included in the first message indicates false, receive the first system information in a second period which is a change period next to the first period, and receive the second MBS system information based on the first system information received in the second period.

The first MBS system information may be system information with respect to an area composed of one or more cells, and the at least one processor may further be configured to receive second MBS system information from the base station, identify whether an area identifier included in the first MBS system information and an area identifier included in the second MBS system information are the same as each other, and when the area identifier included in the first MBS system information and the area identifier included in the second MBS system information are different from each other, identify that the MBS system information is not valid.

The at least one processor may further be configured to transmit a radio resource control (RRC) connection request message to the base station, based on the transmitted RRC connection request message, receive an RRC connection configuration message including first signaling radio bearer (SRB) configuration information, and based on the received RRC connection configuration message, transmit an RRC connection complete message including broadcasting service information in which the terminal is interested, wherein the broadcasting service information in which the terminal is interested may include at least one of a list of broadcasting services in which the terminal is interested, a list of identifiers of the broadcasting services in which the terminal is interested, priority order information of the broadcasting services in which the terminal is interested, or an indicator indicating the broadcasting services in which the terminal is interested.

The at least one processor may further be configured to receive, from the base station, an RRC reconfiguration message including first information indicating whether a data radio bearer (DRB) configured for the terminal is a DRB for a unicast service or a DRB for a broadcasting service, and when the first information indicates the DRB for a broadcasting service, ignore key information indicated in a security configuration or identify that the key information is omitted in the security configuration.

The at least one processor may further be configured to receive, from the base station, an RRC reconfiguration message including an identifier of a first data radio bearer (DRB) configured for the terminal, receive, from the base station, a count check message including an identifier of a second DRB and count value information corresponding to the second DRB, based on the received count check message, identify whether the identifier of the first DRB corresponds to the identifier of the second DRB, when the identifier of the first DRB corresponds to the identifier of the second DRB, transmit, to the base station, a count check response message including the count value information with respect to the second DRB, when the identifier of the first DRB does not correspond to the identifier of the second DRB, identify whether a DRB corresponding to the identifier of the first DRB is a DRB for a unicast service or a DRB for a broadcasting service, and when the DRB corresponding to the identifier of the first DRB is the DRB for a unicast service, transmit, to the base station, a count check response message including count value information with respect to the first DRB.

The at least one processor may further be configured to receive, from the base station, an RRC reconfiguration message including an identifier of a first DRB configured for the terminal, receive, from the base station, a count check message including an identifier of a second DRB and count value information corresponding to the second DRB, based on the received count check message, identify whether a DRB corresponding to the identifier of the first DRB is for a unicast service or a broadcasting service, when the DRB corresponding to the identifier of the first DRB is for the unicast service, transmit, to the base station, a count check response message including count value information with respect to the first DRB, and when the DRB corresponding to the identifier of the first DRB is for the broadcasting service, transmit, to the base station, a count check response message not including the count value information with respect to the first DRB.

According to an embodiment of the present disclosure, a base station for processing broadcasting service configuration information in a wireless communication system includes a transceiver, and at least one processor configured to transmit, to a terminal, first multicast broadcast service (MBS) system information including broadcasting service list information, and transmit a first message in a paging occasion period.

The broadcasting service list information may include temporary mobile group identity (TMGI) information and session identifier information with respect to each of broadcasting services, wherein the TMGI information may include at least one of a public land mobile network (PLMN) identifier with respect to a broadcasting service corresponding to the terminal or an identifier of the broadcasting service corresponding to the terminal.

The first message may include a system information change indicator and an MBS system information update indicator.

The at least one processor may further be configured to receive, from the terminal, a radio resource control (RRC) connection request message, based on the received RRC connection request message, transmit, to the terminal, an RRC connection configuration message including first signaling radio bearer (SRB) configuration information, and based on the transmitted RRC connection configuration message, receive, from the terminal, an RRC connection complete message including broadcasting service information in which the terminal is interested, wherein the broadcasting service information in which the terminal is interested may include at least one of a list of broadcasting services in which the terminal is interested, a list of identifiers of the broadcasting services in which the terminal is interested, priority order information of the broadcasting services in which the terminal is interested, or an indicator indicating the broadcasting services in which the terminal is interested.

The at least one processor may further be configured to transmit, to the terminal, an RRC reconfiguration message including the first information indicating whether a data radio bearer (DRB) configured for the terminal is a DRB for a unicast service or a DRB for a broadcasting service, wherein, when the first information indicates the DRB for a broadcasting service, the RRC reconfiguration message may be transmitted to the terminal by omitting key information indicated in a security configuration.

The at least one processor may further be configured to transmit, to the terminal, an RRC reconfiguration message including an identifier of a first DRB configured for the terminal, transmit, to the terminal, a count check message including an identifier of a second DRB and count value information corresponding to the second DRB, when the identifier of the first DRB corresponds to the identifier of the second DRB, receive, from the terminal, a count check response message including the count value information with respect to the second DRB, and when the identifier of the first DRB does not correspond to the identifier of the second DRB, and a DRB corresponding to the identifier of the first DRB is a DRB for a unicast service, receive, from the terminal, a count check response message including count value information with respect to the first DRB.

The at least one processor may further be configured to transmit, to the terminal, an RRC reconfiguration message including an identifier of a first DRB configured for the terminal, transmit, to the terminal, a count check message including an identifier of a second DRB and count value information corresponding to the second DRB, and when the identifier of the first DRB corresponds to the identifier of the second DRB, and a DRB corresponding to the identifier of the first DRB is a DRB for a unicast service, or when the identifier of the first DRB does not correspond to the identifier of the second DRB, and the DRB corresponding to the identifier of the first DRB is the DRB for a unicast service, receive, from the terminal, a count check response message including count value information with respect to the first DRB.

### MODE OF DISCLOSURE

Hereinafter, desired embodiments of the present disclosure will be described in detail with reference to the accompanying drawings. Here, it has to be noted that in the accompanying drawings, like elements are referred to by using like reference numerals as possible. Also, detailed descriptions of well-known functions and configurations in the art are omitted when it is deemed that they may unnecessarily obscure the essence of the present disclosure.

In the following descriptions of embodiments in the specification, descriptions of techniques that are well known in the art and are not directly related to the present disclosure are omitted. By omitting unnecessary descriptions, the gist of the present disclosure may not be blurred and may be relatively more clearly conveyed.

For the same reason, one or more components in the accompanying drawings may be exaggerated, omitted, or schematically illustrated. The size of the respective elements may not fully reflect their actual size. In each drawing, the same reference numerals are given to the same or corresponding elements.

Advantages and features of the present disclosure and methods of accomplishing the same will be clearly understood by referring to the embodiments described in detail below with the accompanying drawings. However, the present disclosure is not limited to the embodiments disclosed hereinafter and may be embodied in many different forms.
The present embodiments are provided so that the present disclosure will be thorough and complete and the scope of the present disclosure is fully conveyed to one of ordinary skill in the art, and the present disclosure will only be defined by the appended claims. Like numbers refer to like elements throughout the specification.

Here, it may be understood that respective blocks and combinations of the blocks in processing flowcharts will be performed by computer program instructions. The computer program instructions may be loaded on a processor of a universal computer, a special-purpose computer, or other programmable data processing equipment, and thus they generate means for performing functions described in the block(s) of the flowcharts when executed by the processor of the computer or other programmable data processing equipment. The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

Furthermore, each block may represent a module, segment, or a part of code including one or more executable instructions to perform particular logic function(s). It should also be noted that the functions described in the blocks may occur out of order in alternate embodiments of the present disclosure. For example, two blocks illustrated successively may actually be executed substantially concurrently, or the blocks may sometimes be performed in a reverse order according to the corresponding function.

Here, the term "unit" in the embodiments means a software component or hardware component such as a field-programmable gate array (FPGA) or an application-specific integrated circuit (ASIC), and performs a specific function. However, the "unit" is not limited to the software or hardware. The "unit" may be configured to be stored in an addressable storage medium, or to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. Functions served by components and "units" may be combined into a less number of components and the "units" or further divided into a more number of components and "units." Moreover, the components and the "units" may be implemented to execute one or more central processing units (CPUs) in a device or security multimedia card.

When particularly describing embodiments of the present disclosure, a New RAN (NR) that is a radio access network and a packet core (5^{th} generation (5G) System, 5G Core Network, or NG Core: Next Generation Core) that is a core network in 5G mobile communication standards defined by 3^{rd} Generation Partnership Project (3GPP) that is a mobile communication standard organizing group are main targets, but the essential concept of the present disclosure may be modified without departing from the scope of the present disclosure and may be applied to other communication system based on similar technical backgrounds, and the application may be made based on determination by one of ordinary skill in the art.

In the 5G system, a network data collection and analysis function (NWDAF) may be defined to support network automation, the NWDAF referring to a network function for providing a function to analyze and provide data collected over a 5G network. The NWDAF may collect/store/analyze information from the 5G network and may provide a result to an unspecified network function (NF), and an analysis result may be independently used by each NF.

For convenience of descriptions, some of terms and names defined in the 3GPP LTE standards (standards of 5G, NR, LTE, or similar system) may be used. However, the present disclosure is not limited to these terms and names, and may be equally applied to communication systems conforming to other standards.

Hereinafter, the present disclosure relates to a method and an apparatus for processing broadcasting service configuration information in a wireless communication system. In detail, the present disclosure relates to a method and an apparatus for determining whether or not a broadcasting service of interests of a terminal is provided and configuration a radio bearer for a broadcasting service, whereby the terminal may obtain and configure broadcasting service configuration information in order to receive a broadcasting service packet transmitted by a base station.

The term indicating a signal, the term indicating a channel, the term indicating control information, the term indicating network entities, the term indicating a component of an apparatus, and the like, used in the descriptions herebelow, are examples given for convenience of description. Accordingly, the terms shall limit the present disclosure, and other terms indicating objects having equal technical meanings may be used.

In the descriptions herebelow, a physical channel and a signal may be interchangeably used with data or a control signal. For example, although a physical downlink shared channel (PDSCH) is a term referring to a physical channel transmitting data, the PDSCH may also be used to refer to data. That is, in the present disclosure, the expression "transmit a physical channel" may be equally interpreted with the expression "transmit data or a signal through a physical channel."

Hereinafter, in the present disclosure, higher layer signaling denotes a signal transmission method, whereby a signal is transmitted from a base station to a terminal by using a downlink data channel of a physical layer or from the terminal to the base station by using an uplink data channel of a physical layer. The higher layer signaling may be understood as radio resource control (RRC) signaling or a media access control (MAC) control element (CE).

Also, in the present disclosure, while the expression such as "exceeding" or "less than" is used to determine whether a particular condition is satisfied or fulfilled, the expression may not exclude meaning of "equal to or greater than" or "equal to or less than." A condition written with "equal to or greater than" may be replaced with a condition with "exceeding," a condition with "equal to or less than" may be replaced with a condition with "less than," and a condition with "equal to or greater than... and less than... " may be replaced with a condition with "exceeding... and equal to or less than... "

Also, one or more embodiments of the present disclosure are described by using the terms used in some communication standards (for example, the 3GPP), but the terms are only examples for description. The embodiments of the present disclosure may be easily modified and applied to other communication systems.

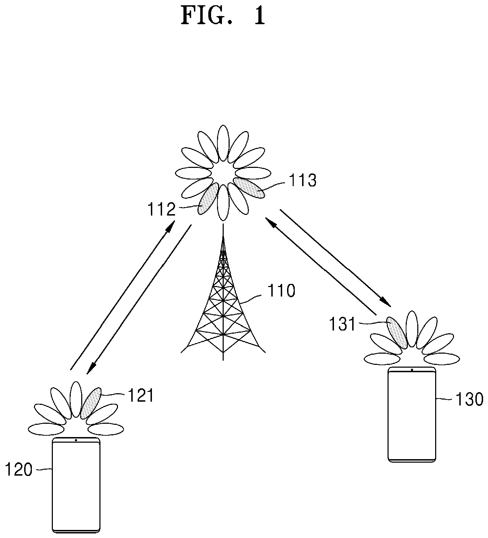

FIG. 1 illustrates a wireless communication system according to embodiments of the present disclosure.

FIG. 1 illustrates, for example, a base station 110, a terminal 120, and a terminal 130, as one or more nodes using a wireless channel in the wireless communication system. Although FIG. 1 illustrates one base station, other base stations that are the same or substantially the same as the base station 110 may further be included.

The base station 110 may be a network infrastructure providing wireless access to the terminals 120 and 130. The base station 110 may have the coverage defined as a constant geographical area based on a distance within which a signal may be transmitted. In addition to the "base station," the base station 110 may also be referred to as an "access point (AP)", "eNodeB (eNB)," a "5G node," "next generation node B (gNB)," a "wireless point," a "transmission/reception point (TRP)," or other terms having technical meanings equivalent thereto.

Each of the terminals 120 and 130 may be a device used by a user and may perform communication with the base station 110 through a radio channel. A link from the base station 110 to the terminal 120 or the terminal 130 is referred to as a downlink (DL), and a link from the terminal 120 or the terminal 130 to the base station 110 is referred to as an uplink (UL). According to cases, at least one of the terminal 120 and the terminal 130 may operate without a user's involvement. That is, at least one of the terminal 120 and the terminal 130 may be a device performing machine-type communication (MTC) and may not be carried by a user. Each of the terminal 120 and the terminal 130 may also be referred to as a "user equipment (UE)," a "mobile station," a "subscriber station," a "remote terminal," a "wireless terminal," a "user device," or other terms having technical meanings equivalent thereto, as well as a "terminal."

The base station 110, the terminal 120, and the terminal 130 may transmit and receive a wireless signal in a millimeter-wave (mmWave) band (e.g. 28 GHz, 30 GHz, 38 GHz, and 60 GHz). Here, to improve the channel gain, the base station 110, the terminal 120, and the terminal 130 may perform beamforming. Here, beamforming may include transmission beamforming and reception beamforming. That is, the base station 110, the terminal 120, and the terminal 130 may assign directivity to a transmission signal or a reception signal. To this end, the base station 110 and the terminals 120 and 130 may select serving beams 112, 113, 121, and 131 through a beam search or beam management procedure. After the serving beams 112, 113, 121, and 131 are selected, communication thereafter may be performed through a resource in a quasi co-location (QCL) relationship with a resource transmitting the serving beams 112, 113, 121, and 131.

When large-scale characteristics of a channel transmitting a symbol on a first antenna port are to be inferred from a channel transmitting a symbol on a second antenna port, it may be assessed that the first antenna port and the second antenna port are in a QCL relationship. For example, the large-scale characteristics may include at least one of delay spread, Doppler spread, Doppler shift, average gain, average delay, and a spatial receiver parameter.

The base station and the terminal may be connected through an Uu interface. An UL denotes a radio link through which the terminal transmits data or control signals to the base station, and a DL denotes a radio link through which the base station transmits data or control signals to the terminal.

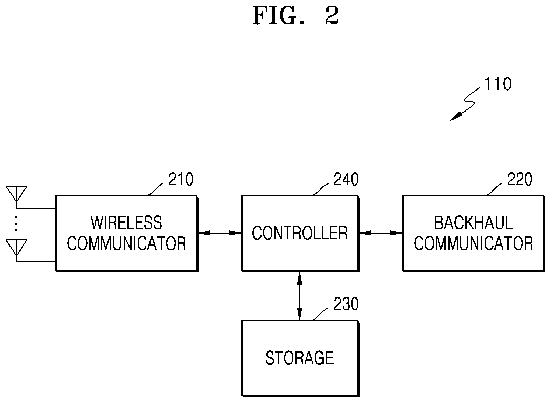

FIG. 2 illustrates a configuration of a base station in a wireless communication system according to an embodiment of the present disclosure. The configuration illustrated in FIG. 2 may be understood as a configuration of the base station 110. The terms "unit," "module," and the like used hereinafter denote a unit, which processes at least one function or motion, and the unit and the module may be implemented by hardware or software, or by a combination of hardware and software.

Referring to FIG. 2, the base station 110 may include a wireless communicator 210, a backhaul communicator 220, a storage 230, and a controller 240. However, components of the base station are not limited to the above examples. For example, the base station may include more or fewer components than the components described above. In addition, the wireless communicator 210, the backhaul communicator 220, the storage 230, and the controller 240 may be implemented in the form of a single chip. Also, the controller 240 may include one or more processors.

The wireless communicator 210 may perform functions to transmit and receive a signal through a wireless channel. For example, the wireless communicator 210 may perform a conversion function between a baseband signal and a bitstream according to the physical layer standards of a system. For example, in data transmission, the wireless communicator 210 may generate complex symbols by encoding and modulating a transmission bitstream. Also, in data reception, the wireless communicator 210 may reconstruct a reception bitstream by demodulating and decoding a baseband signal.

Also, the wireless communicator 210 may up-convert the baseband signal into a radio frequency (RF) band signal and then transmit the RF band signal via an antenna and may down-convert an RF band signal received via the antenna into a baseband signal. To this end, the wireless communicator 210 may include a transmission filter, a reception filter, an amplifier, a mixer, an oscillator, a digital-to-analog converter (DAC), an analog-to-digital converter (ADC), or the like. Also, the wireless communicator 210 may include a plurality of transmission and reception paths. Furthermore, the wireless communicator 210 may include at least one antenna array formed of a plurality of antenna elements.

In terms of hardware, the wireless communicator 210 may include a digital unit and an analog unit, and the analog unit may include a plurality of sub-units according to operation power, operating frequencies, etc. The digital unit may be implemented as at least one processor (e.g., a digital signal processor (DSP)).

The wireless communicator 210 may transmit and receive the signal as described above. Thus, all or part of the wireless communicator 210 may be referred to as a "transmitter," a "receiver," or a "transceiver." Also, in the description given hereinafter, the transmission and reception performed through the wireless channel also indicate the execution of the processes as described above by the wireless communicator 210.

The backhaul communicator 220 may provide an interface for performing communication with other nodes in a network. That is, the backhaul communicator 220 may convert a bitstream transmitted from the base station 110 to other nodes, for example, other access nodes, other base stations, higher layer nodes, a core network, etc., into a physical signal, and may convert a physical signal received from the other nodes, into a bitstream.

The storage 230 may store data, such as a basic program, an application program, configuration information, etc. for operation of the base station 110. The storage 230 may include a volatile memory, a nonvolatile memory, or a combination of a volatile memory and a nonvolatile memory. Also, the storage 230 may provide stored data in response to a request of the controller 240.

The controller 240 may control general operations of the base station 110. For example, the controller 240 may transmit and receive a signal through the wireless communicator 210 or the backhaul communicator 220. Also, the controller 240 may write and read data to and from the storage 230. Also, the controller 240 may perform functions of a protocol stack required by the communication standards. According to another embodiment, the protocol stack may be included in the wireless communicator 210. To this end, the controller 240 may include at least one processor. According to embodiments, the controller 240 may control the base station 110 to perform operations according to embodiments described below.

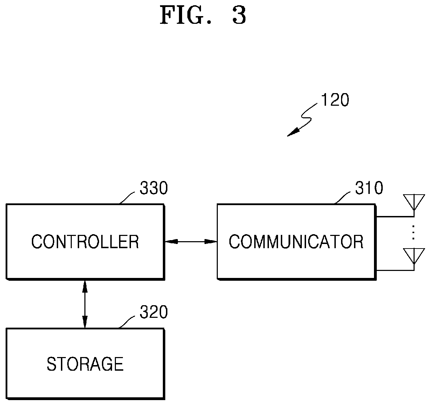

FIG. 3 illustrates a configuration of a terminal in a wireless communication system according to an embodiment of the present disclosure.

The configuration illustrated in FIG. 3 may be understood as a configuration of the terminal 120. The terms "unit", "module", and the like, used hereinafter, indicate a unit, which processes at least one function or motion, and the unit and the module may be implemented by hardware or software, or by a combination of hardware and software.

Referring to FIG. 3, the terminal 120 may include a communicator 310, a storage 320, and a controller 330. However, components of the terminal 120 are not limited to the above examples. For example, the terminal 120 may include more or fewer components than the components described above. In addition, the communicator 310, the storage 320, and the controller 330 may be implemented in the form of a single chip. Also, the controller 330 may include one or more processors.

The communicator 310 may perform functions to transmit and receive a signal through a wireless channel. For example, the communicator 310 may perform a conversion function between a baseband signal and a bitstream according to the physical layer standards of a system. For example, in data transmission, the communicator 310 may generate complex symbols by encoding and modulating a transmission bitstream. Also, in data reception, the communicator 310 may reconstruct a reception bitstream by demodulating and decoding a baseband signal. The communicator 310 may up-convert the baseband signal into an RF band signal and then transmit the RF band signal via an antenna and may down-convert an RF band signal received via the antenna into a baseband signal. For example, the communicator 310 may include a transmission filter, a reception filter, an amplifier, a mixer, an oscillator, a DAC, an ADC, etc.

Also, the communicator 310 may include a plurality of transmission and reception paths. Furthermore, the communicator 310 may include at least one antenna array including a plurality of antenna elements. In terms of hardware, the communicator 310 may include a digital circuit and an analog circuit (e.g., a radio frequency integrated circuit (RFIC)). Here, the digital circuit and the analog circuit may be implemented in one package. Also, the communicator 310 may include a plurality of RF chains. Further, the communicator 310 may perform beamforming.

The communicator 310 may transmit and receive the signal as described above. Thus, all or part of the communicator 310 may be referred to as a "transmitter," a "receiver," or a "transceiver." Also, in the description given hereinafter, the transmission and reception performed through the wireless channel also indicate the execution of the processes as described above by the wireless communicator 310.

The storage 320 may store data, such as a basic program, an application program, configuration information, etc. for operation of the terminal 120. The storage 320 may be include a volatile memory, a nonvolatile memory, or a combination of a volatile memory and a nonvolatile memory. Also, the storage 320 may provide stored data in response to a request of the controller 330.

The controller 330 may control general operations of the terminal 120. For example, the controller 330 may transmit and receive a signal through the communicator 310. Also, the controller 330 may write and read data to and from the storage 320. Also, the controller 330 may perform functions of a protocol stack required by the communication standards. To this end, the controller 330 may include at least one processor or micro-processor or may be included in a processor. Also, part of the communicator 310 and the controller 330 may be referred to as a communication processor (CP). According to embodiments, the controller 330 may control the terminal 120 to perform operations according to embodiments described below.

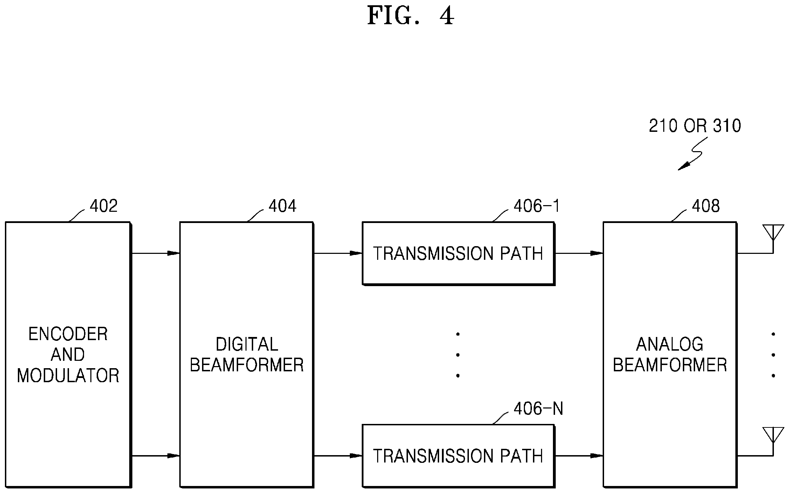

FIG. 4 illustrates a configuration of a communicator in a wireless communication system according to an embodiment of the present disclosure.

FIG. 4 illustrates an example of a detailed configuration of the wireless communicator 210 of FIG. 2 or the communicator 310 of FIG. 3. In detail, FIG. 4 illustrates one or more components of the wireless communicator 210 of FIG. 2 or the communicator 310 of FIG. 3, the one or more components being for performing beamforming.

Referring to FIG. 4, the wireless communicator 210 or the communicator 310 may include an encoder and modulator 402, a digital beamformer 404, a plurality of transmission paths 406-1 to 406-N, and an analog beamformer 408.

The encoder and modulator 402 may perform channel encoding. For the channel encoding, at least one of a low density parity check (LDPC) code, a convolution code, and a polar code may be used. The encoder and modulator 402 may generate modulation symbols by performing constellation mapping.

The digital beamformer 404 may perform beamforming on digital signals (e.g., modulation symbols). To this end, the digital beamformer 404 may multiply the modulation symbols by beamforming weights. Here, the beamforming weights may be used to change a multitude and a phase of a signal and may be referred to as a "precoding matrix," a "precoder," etc. The digital beamformer 404 may output the modulation symbols on which digital beamforming is performed, to the plurality of transmission paths 406-1 to 406-N. Here, according to an MIMO transmission scheme, the modulation symbols may be multiplexed, or the same modulation symbols may be provided to the plurality of transmission paths 406-1 to 406-N.

The plurality of transmission paths 406-1 to 406-N may convert the digital signals on which digital beamforming is performed into analog signals. To this end, each of the plurality of transmission paths 406-1 to 406-N may include an inverse fast Fourier transform (IFFT) operator, a cyclic prefix (CP) inserter, a DAC, and an up-converter. The CP inserter may be used for an orthogonal frequency division multiplexing (OFDM) scheme and may be excluded when other physical layer schemes (e.g., a filter bank multi-carrier (FBMC)) are applied. That is, the plurality of transmission paths 406-1 to 406-N may provide individual signal processing processes with respect to a plurality of streams generated by digital beamforming. However, according to an implementation scheme, one or more components of the plurality of transmission paths 406-1 to 406-N may be commonly used.

The analog beamformer 408 may perform beamforming on analog signals. To this end, the digital beamformer 404 may multiply the analog signals by beamforming weights. Here, the beamforming weights may be used to change a multitude and a phase of a signal. In detail, the analog beamformer 440 may be configured in various ways according to a connection structure between the plurality of transmission paths 406-1 to 406-N and antennas. For example, each of the plurality of transmission paths 406-1 to 406-N may be connected to one antenna array. As another example, the plurality of transmission paths 406-1 to 406-N may be connected to one antenna array. As another example, the plurality of transmission paths 406-1 to 406-N may be adaptively connected to one antenna array or two or more antenna arrays.

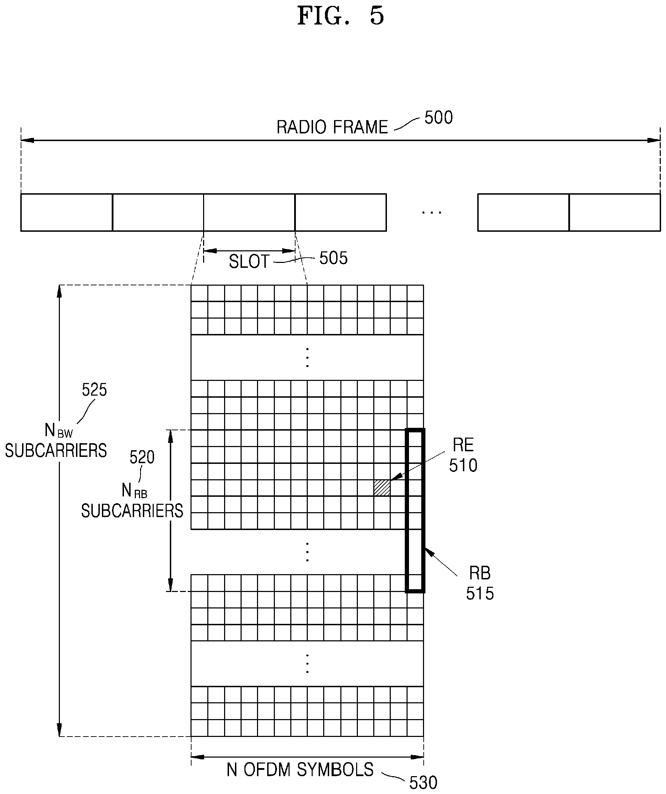

FIG. 5 illustrates a structure of a radio time-frequency resource of a wireless communication system according to an embodiment of the present disclosure.

Referring to FIG. 5, in a radio resource domain, a horizontal axis indicates a time domain, and a vertical axis indicates a frequency domain. A minimum transmission unit in the time domain may be an OFDM symbol or a DFT-S-OFDM symbol, and N_{symb} OFDM symbols or DFT-S-OFDM symbols 530 may be included in one slot 505. Unlike a slot, in an NR system, a length of a subframe may be defined as 1.0 ms, and a length of a radio frame 500 may be defined as 10 ms. A minimum transmission unit in the frequency domain may be a subcarrier, and a bandwidth of the total system transmission band may include the total of N_{BW} subcarriers 525. Specific numeral values, such as N_{symb}, N_{BW}, etc., may be variably applied according to a system.

A basic unit of the time-frequency resource domain may be a resource element (RF) 510, and the RE 510 may be indicated by an OFDM symbol index or a DFT-S-OFDM symbol index and a subcarrier index. A resource block (RB) 515 may be defined by N_{RB} consecutive subcarriers 520 in the frequency domain. In general, a minimum transmission unit of data is an RB unit, and in the NR system, generally, N_{symb} = 14, and N_{RB} = 12.

The structure of the radio time-frequency resource in FIG. 5 may be applied to the Uu interface.

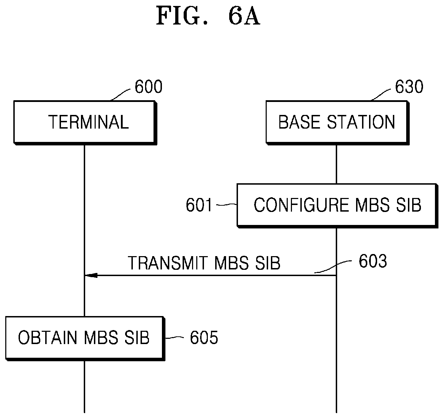

FIG. 6A illustrates an operation of processing a system information block (SIB) message including broadcasting service configuration information, according to an embodiment of the present disclosure.

Referring to FIG. 6A, a base station 630 may compose a multicast broadcast service(MBS) SIB message including broadcasting service configuration information, in operation 601. Also, in operation 603, the base station 630 may transmit the corresponding MBS SIB message to a terminal 600. The MBS SIB message may include at least one of information about an MBS service that is being provided, information about an MBS service that is valid to be provided, information about an MBS service area, information about a serving MBS frequency, and information about an ambient MBS frequency. The information about the MBS service that is being provided or the information about the MBS service that is valid to be provided may be configured as below.

**[Table 1]**

| |
|---|
| • ValidMBSLIst = MBSSessionInfoList |
| - MBSSessionInfo = tmgi, sessionId |
| » tmgi = plmn-Id, serviceId |

Referring to [Table 1], a list of MBS service information may include a list of at least one piece of information between information about a temporary mobile group identity (TMGI) and information about a session identifier. The TMGI information may be composed of at least one piece of information between a public land mobile network (PLMN) identifier and a service identifier.

The terminal 600 may obtain the MBS SIB message transmitted by the base station 630, in operation 605. Based on the information about the MBS service that is being provided or the information about the MBS service that is valid to be provided, the information being included in the MBS SIB message, the terminal 600 may determine whether an MBS service in which the terminal 600 is interested is being provided or is valid to be provided. Information indicating an MBS service of interests may correspond the TMGI information of the MBS SIB message.

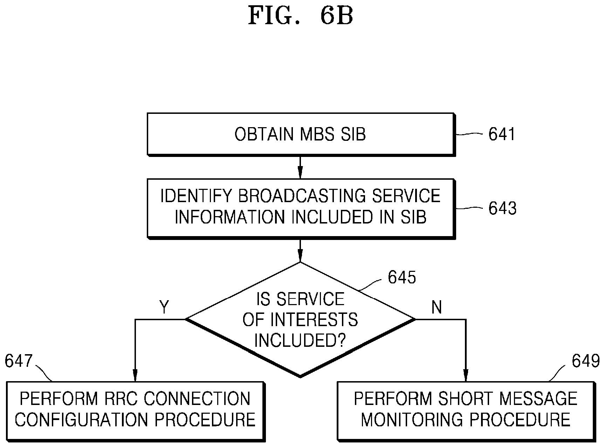

FIG. 6B illustrates an operation, performed by a terminal, of processing an SIB message including broadcasting service configuration information, according to an embodiment of the present disclosure.

Referring to FIG. 6B, the terminal may obtain an MBS SIB in operation 641. In operation 643, the terminal may identify MBS service information included in the obtained MBS SIB message. The MBS service information may include the information of [Table 1]. In operation 645, the terminal may determine whether a service of interests of the terminal is included in a list of the MBS service information. According to an embodiment, the terminal may perform an operation of identifying whether at least one of the TMGI information and the session information of interests is included in the MBS service information list. Based on the identifying in operation 645, when it is identified that information about the service of interests of the terminal is included in the MBS service information, the terminal may perform, in operation 647, an RRC connection configuration procedure to receive the corresponding MBS service. Based on the identifying in operation 645, when it is identified that the information about the service of interests of the terminal is not included in the MBS service information, the terminal may proceed to operation 649 and perform a short message monitoring procedure. The monitoring of the short message by the terminal in operation 649 may be performed in a paging occasion period of the terminal.

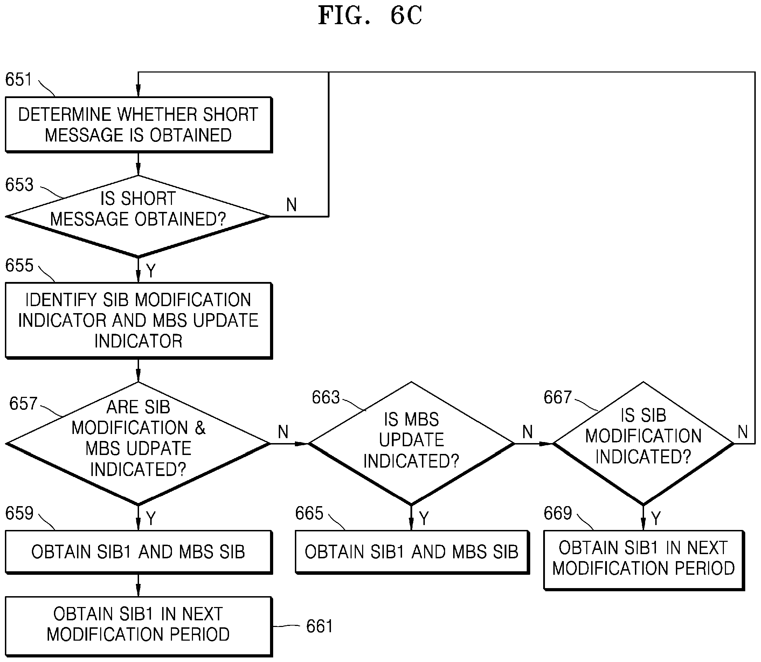

FIG. 6C illustrates an operation, performed by a terminal, of processing a short message including broadcasting service configuration information, according to an embodiment of the present disclosure.

Referring to FIG. 6C, the terminal may perform an operation of determining whether a short message is obtained, in operation 651. The short message may be obtained in the paging occasion period of the terminal, and the obtaining of the short message may be indicated by a physical downlink control channel (PDCCH) addressed by a paging radio network temporary identifier (P-RNTI). When it is determined in operation 653 that the short message is obtained, the terminal may identify an SIB modification indicator and an MBS update indicator included in the short message in operation 655. Based on the determining in operation 653, when it is determined that the short message is not obtained, the terminal may proceed to operation 651. The SIB modification indicator may be a field indicating whether or not system information (SI) is changed, and the MBS update indicator may correspond to a field indicating whether or not an MBS SIB is changed. When a value of the SIB modification indicator is configured as true, it is indicated that the SI is changed. When a value of the MBS update indicator is configured as true, it is indicated that the MBS SIB is changed. In operation 657, the terminal may determine whether the SIB modification indicator is configured as true and the MBS update indicator is configured as true. Based on the determining in operation 657, when it is determined that the both indicators are configured as true, the terminal may obtain an SIB1 message without waiting for a next modification period and may obtain an MBS SIB message by referring to scheduling information of the SIB1 message, in operation 659. Also, in operation 661, the terminal may obtain the SIB1 message in the next modification period and may obtain updated SIB messages (e.g., SIB2, SIB3, SIB4, SIB5, SIB6, etc.) by referring to the scheduling information of the SIB1 message. That is, when both of the SIB modification indicator and the MBS update indicator are configured as true, the terminal may obtain the SIB1 message twice for a purpose of obtaining an SIB message that is different from a purpose of obtaining an MBS SIB.

According to another embodiment, based on determining in operation 663, when it is determined that the SIB modification indicator is configured as false, and the MBS update indicator is configured as true, the terminal may obtain an SIB1 message without waiting for a next modification period and may obtain an MBS SIB message by referring to scheduling information of the SIB1 message, in operation 665.

According to another embodiment, based on determining in operation S667, when it is determined that the SIB modification indicator is configured as true, and the MBS update indicator is configured as false, the terminal may obtain an SIB1 message in a next modification period and may obtain updated SIB messages (e.g., SIB2, SIB3, SIB4, SIB5, SIB6, etc.) by referring to scheduling information of the SIB 1 message, in operation 669 When it is determined that both of the SIB modification indicator and the MBS update indicator are configured as false, the terminal may maintain information of a previously obtained SIB message.

The terminal having obtained the MBS SIB in operation 659 or 665 may perform the procedure of FIG. 6B.

According to various embodiments of the present disclosure, when the terminal processes the MBS SIB message, the terminal may perform a validity check operation. The MBS SIB may correspond to a cell specific SIB or an area specific SIB. When the MBS SIB corresponds to an area specific SIB, the MBS SIB may be operated based on systemInformationAreaID. For example, the area may be configured as an SI area and may include one cell or a plurality of cells, and a piece of areaID may be indicated by the systemInformationAreaID. When the MBS SIB corresponds to an area specific SIB, the terminal may determine that the MBS SIB is changed, when the systemInformationAreaID is different from systemInformationAreaID of a previously obtained MBS SIB. When the MBS SIB corresponds to an area specific SIB, the terminal may determine that the previously obtained MBS SIB is valid, when the systemInformationAreaID is the same as the systemInformationAreaID of the previously obtained MBS SIB. When the MBS SIB corresponds to a cell specific SIB, the terminal may determine that the previously obtained MBS SIB is valid, when a cell ID is the same as a cell ID of the previously obtained MBS SIB.

The obtaining of the SI message by the terminal may be performed in at least one case from among a case of sell selection (power on), cell re-selection, and a change from "out of coverage" to "in coverage" of the terminal, a case in which after RRC reconfiguration with synchronization is completed, a serving radio access technology (RAT) is accessed from a different RAT, a case in which information indicating a change of the SI message is obtained, a case in which a public warning system (PWS) notification is obtained, and a case in which it is determined that an SIB stored in the terminal is not valid any more.

When the terminal obtains and stores the MBS SIB, the terminal may store at least one piece of information from among areaScope (when configured) of the corresponding MBS SIB, a first PLMN identifier of PLMN-IdentityInfoList, a cell ID, systemInformationAreaID (when configured), and valueTag (when configured) indicated by si-SchedulingInfo with respect to the MBS SIB. In at least one of the case in which "out of coverage" is switched to "in coverage" after cell re-selection and the case in which SI change indication is obtained, the terminal may use a previously stored MBS SIB, when it is determined that the previously stored MBS SIB is valid.

When it is determined that three hours have passed after the current MBS SIB was stored, the terminal may determine to obtain an MBS SIB. When areaScope is applied with respect to the MBS SIB, the terminal may, based on si-ScheudlingInfo with respect to the MBS SIB, received from a serving cell, compare the MBS SIB with a PLMN ID, systemInformationAreaID, and valueTag of a previously stored MBS SIB, and when it is determined that the MBS SIB is not the same as the previously stored MBS SIB, the terminal may determine that the previously stored MBS SIB is not valid and may determine to obtain the MBS SIB. When the areaScope is not applied with respect to the MBS SIB, the terminal may, based on the si-SchedulingInfo with respect to the MBS SIB, received from the serving cell, compare the MBS SIB with the PLMN ID, the systemInformationAreaID, and the valueTag of the previously stored MBS SIB, and when it is determined that the MBS SIB is not the same as the previously stored MBS SIB, the terminal may determine that the previously stored MBS SIB is not valid and may determine to obtain the MBS SIB.

The terminal may obtain the MBS SIB through an on-demand system information obtainment procedure. With respect to a terminal in an RRC _CONNECTED state, when, for example, the terminal operates in an active bandwidth part (BWP) and not in a common search space in which the terminal is configured to monitor an SI message or a paging message, a base station may provide the MBS SIB to the terminal through an RRCReconfiguration message.

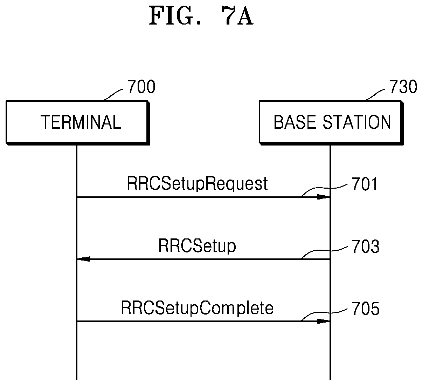

FIG. 7A illustrates a signal flow between a terminal and a base station performing an RRC connection configuration procedure for processing broadcasting service configuration information, according to an embodiment of the present disclosure.

Referring to FIG. 7A, a terminal 700 may transmit an RRCSetupRequest message to a base station 730 in operation 701. The terminal 700 may receive an RRCSetup message from the base station 730 in response to the RRCSetupRequest, in operation 703. A first signaling radio bearer (SRB) may be configured for the terminal 700 receiving the RRCSetup message. In operation 705, the terminal 700 may transmit an RRCSetupComplete message to the base station 730 in response to the RRCSetup message. In operation 705, the terminal 700 may include broadcasting service information of interests in the RRCSetupComplete message. The broadcasting service information of interests includes at least priority information indicating priority indication of a broadcasting service or priority indication of unicast service and a list of broadcasting services to be received and may include at least one other piece of information of [Table 2] below.

**[Table 2]**

| | |
|---|---|
| • A list of broadcasting services to be received, a service identifier for each broadcasting service, and priority information for each broadcasting service | |
| • Information about a broadcasting service identifier may be represented by an integer value having one-on-one correspondence to a TMGI index indicating a service of interests of a terminal in an MBS SIB obtained by the terminal or may be represented by a bitmap with respect to the TMGI index indicated by the MBS SIB (a bit value corresponding to a TMGI index indicating interests of the terminal is indicated as true, and a bit value corresponding to a TMGI index indicating no interests of the terminal is indicated as false). | |
| | • For example, a first TMGI may be mapped to TMGI index0, a second |
| TMGI may be mapped to TMGI index1, etc. | |
| • The priority may be represented by 1-bit information. | |
| • Priority indication of a broadcasting service or priority indication of a unicast service | |
| • s-NSSAI-List indicates slice information corresponding to an MBS service | |

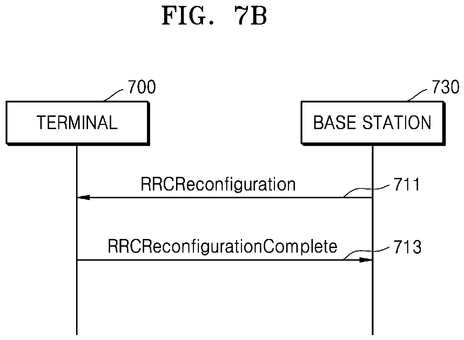

When the base station 730 receives the broadcasting service information of interests of the terminal 700, the base station 730 transmits configuration information to the terminal 700 to configure a radio bearer for a broadcasting service. A procedure for configuring the radio bearer for the broadcasting service will be described with reference to FIG. 7B below.

FIG. 7B illustrates a signal flow between a terminal and a base station performing a procedure for configuring a radio bearer for a broadcasting service, according to an embodiment of the present disclosure.

Referring to FIG. 7B, the terminal 700 receives an RRCReconfiguration message from the base station 730 in operation 711. The terminal receiving the RRCReconfiguration message may configure a second SRB, one or more data radio bearers (DRBs) for a unicast service, and one or more DRBs for a broadcasting service, based on information of srb-ToAddModlist and drb-ToAddModList of RadioBearerConfig. In the present disclosure, the DRB for a unicast service will be indicated as a point to point (PTP) DRB, and the DRB for a broadcasting service will be indicated as a point to multipoint (PTM) DRB. The base station 730 includes indication information separately indicating the PTP DRB and the PTM DRB configured for the terminal 700, in the RRCReconfiguration message. The information separately indicating the PTP DRB and the PTM DRB includes a configuration with respect to the PTM DRB, the configuration including an identifier , a TMGI, of a broadcasting service mapped to the corresponding PTM DRB and may include at least one of the following pieces of information
(1) SDAP-Config or PDCP-Config Including an indicator indicating a PTP DRB and an indicator indicating a PTM DRB
(2) A configuration with respect to the PTM DRB, the configuration including an identifier (a TMGI index) of a broadcasting service mapped to the corresponding PTM DRB
(3) drb-TypePTM configured as true with respect to the PTM DRB, and drb-TypePTM configured as false with respect to the PTP DRB
(4) drb-TypePTP configured as true with respect to the PTP DRB, and drb-TypePTP configured as false with respect to the PTM DRB
(5) radio link control (RLC)-Bearer configuration information including an indicator indicating the PTM DRB The terminal may determine a DRB served by a corresponding RLC bearer as the PTM DRB.
(6) RLC-Bearer configuration information including an indicator indicating the PTP DRB The terminal may determine a DRB served by a corresponding RLC bearer as the PTP DRB.

The terminal 700 may connect the RLC-bearer configuration with a radio bearer and may determine a security configuration based on a security context configuration with respect to the SRB, the PTP DRB, and the PTM DRB. In operation 713, the terminal 700 may transmit an RRCReconfigurationComplete message to the base station 730 in response to the RRCReconfiguration message. The terminal 700 may receive a packet data convergence protocol (PDCP) protocol data unit (PDU) through the SRB, the PTP DRB, and the PTM DRB. When the terminal 700 receives the PDCP PDU, the terminal 700 may update an RX_Next value.

The terminal 700 may receive, from the base station 730, an RRCReconfiguration message indicating the release of one or more already configured DRBs for a unicast service and one or more already configured DRBs for a broadcasting service. The terminal 700 receiving the RRCReconfiguration message may release the one or more DRBs for a unicast service and the one or more DRBs for a broadcasting service based on drb-ToReleaseList information of RadioBearerConfig.

When it is determined that an identifier indicating one or more DRBs for a unicast service or an identifier indicating one or more DRBs for a broadcasting service in the drb-ToReleaseList of the RadioBearerConfig corresponds to one or more DRBs for a unicast service or one or more DRBs for a broadcasting service configured for the terminal 700, the terminal 700 may release a PDCP entity and a DRB identifier of the corresponding DRB. Also, when the terminal 700 determines that a service data adaptation protocol (SDAP) entity is configured with respect to the corresponding DRB, the terminal 700 may indicate to the SDAP entity to release the corresponding DRB. When the terminal 700 is indicated by the base station 730 to release one or more RLC entities and MAC entities associated with the PDCP entity of the corresponding DRB, the terminal 700 may release the RLC entities and the MAC entities indicated.

The terminal 700 may transmit a RRCReconfigurationComplete message to the base station 730 in response to the RRCReconfiguration message including the drb-ToReleaseList information of the RadioBearerConfig.

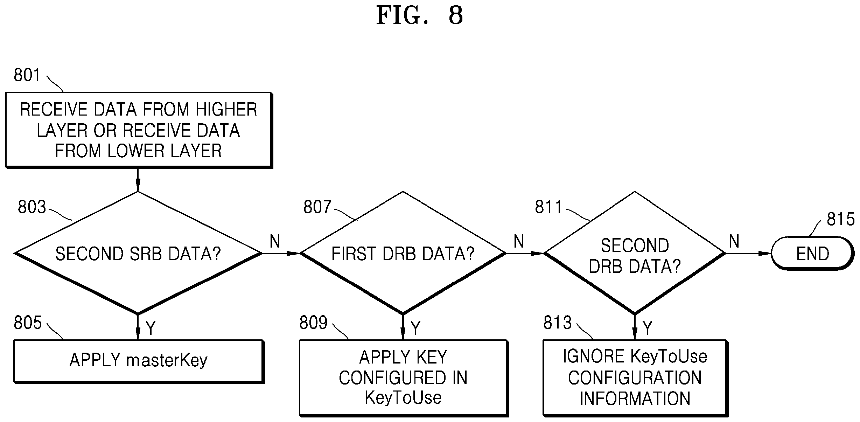

FIG. 8 illustrates an operation, performed by a terminal, of processing security context configuration information of a radio bearer, according to an embodiment of the present disclosure. The operation of FIG. 8 may be performed in a PDCP layer of the terminal.

Referring to FIG. 8, in operation 801, the terminal may determine that data is received from a higher layer (an RRC layer or an L3 layer) or data is received from a lower layer (an RLC layer). The case in which data is received from a higher layer may correspond to a case in which the terminal transmits data to the base station. The case in which data is received from a lower layer may correspond to a case in which the terminal receives data from the base station.

The terminal may determine whether the data received in operation 801 is the second SRB data in operation 803. Based on the determining in operation 803, when the data is the second SRB data, the terminal may determine to apply masterKey with respect to the corresponding data in operation 805. That is, the terminal may ignore a value configured in KeyToUse of SecurityConfig and may determine to apply the masterKey between the masterKey and secondaryKey.

Alternatively, in operation 807, the terminal may determine whether the data received in operation 801 is the first DRB data. Here, the first DRB corresponds to the PTP DRB. Based on the determining in operation 807, when the data is the first DRB data, the terminal may determine to apply, with respect to the corresponding data, a key configured in the KeyToUse of the SecurityConfig between the masterKey the secondaryKey, in operation 809.

Alternatively, in operation 811, the terminal may determine whether the data in operation 801 is the second DRB data. Here, the second DRB corresponds to the PTM DRB. Based on the determining in operation 811, when the data is the second DRB data, the terminal may ignore the information configured in the KeyToUse of the SecurityConfig with respect to the corresponding data and may determine to process the corresponding data by not applying the key, that is, by not applying the AS security. According to another embodiment, the KeyToUse of the SecurityConfig may not be configured with respect to the second DRB data, and the terminal may determine to process the corresponding data by not applying the key, that is, by not applying the AS security. According to another embodiment, the terminal may determine to process the corresponding data by applying the key according to the configured information of the KeyToUse of the SecurityConfig and applying an AS security algorithm. Here, the key and the AS security algorithm may be configured for group-based AS integrity or AS ciphering.

Alternatively, when the terminal does not determine that the corresponding data corresponds to the second SRB data, the first DRB data, or the second DRB data, the terminal may proceed to operation 815.

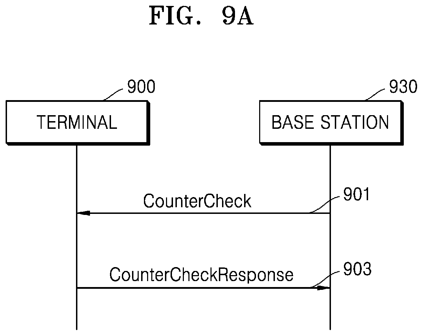

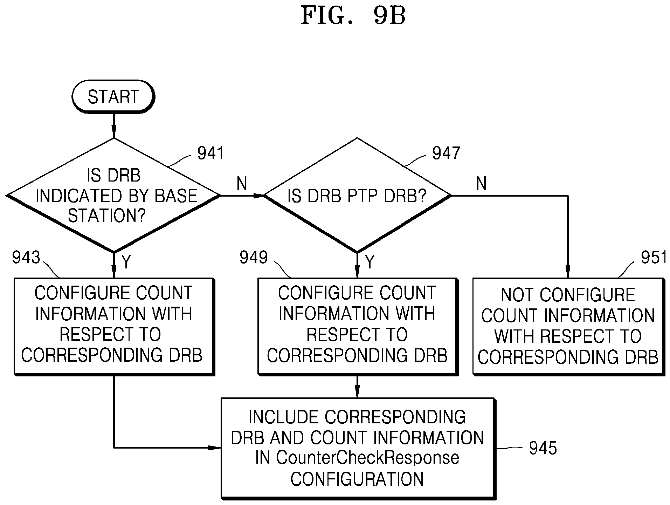

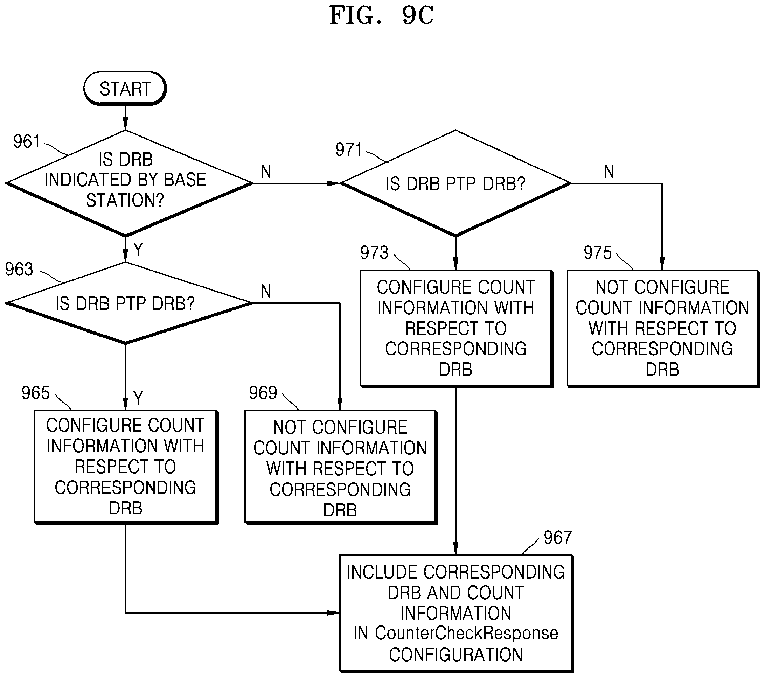

FIG. 9 illustrates a signal flow between a terminal and a base station performing a counter check procedure of a broadcasting service, according to an embodiment of the present disclosure.

Referring to FIG. 9A, in operation 901, a terminal 900 may receive a CounterCheck message from a base station 930. Information included in the corresponding CounterCheck message may include [Table 3] below.

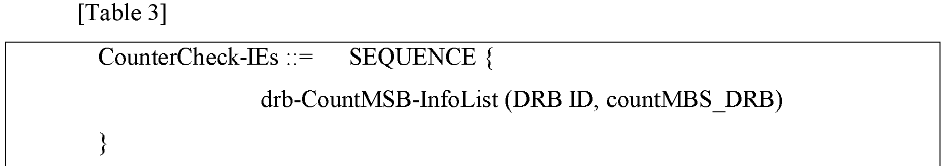

The CounterCheck message may include a DRB for which it is desired to check a count value and corresponding count value information. According to an embodiment of the present disclosure, the corresponding DRB may include only a PTP DRB. According to an embodiment of the present disclosure, the corresponding DRB may include a PTP DRB and a PTM DRB.

In operation 903, the terminal 900 may configure a CounterCheckResponse message and transmit the CounterCheckResponse message to the base station 903, in response to the corresponding CounterCheck message. Information included in the CounterCheckResponse message may include [Table 4] below.

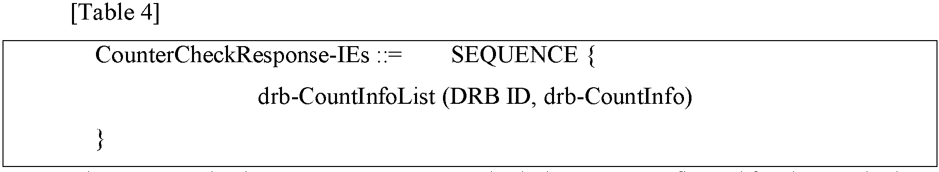

The CounterCheckResponse message may include a DRB configured for the terminal 900 and a count value with respect thereto. According to an embodiment of the present disclosure, the corresponding DRB may include the PTP DRB. The corresponding PTP DRB may correspond to a DRB indicated by the base station 930 in the CounterCheck message. The corresponding PTP DRB may correspond to a DRB that is not indicated by the base station 930 in the CounterCheck message, but is configured for the terminal 900 through an RRCReconfiguration message. According to an embodiment of the present disclosure, the corresponding DRB may include the PTM DRB. The corresponding PTM DRB may correspond to a DRB indicated by the base station 930 in the CounterCheck message. According to an embodiment of the present disclosure, regardless of the indication of the CounterCheck message, the terminal 900 may not include information about the PTM DRB in the CounterCheckResponse message. According to an embodiment of the present disclosure, when the base station 930 indicates a PTM DRB in the CounterCheck message, the terminal 900 may include information about the corresponding PTM DRB in the CounterCheckResponse message. An operation of the terminal performing the counter check procedure will be described with reference to FIG. 9B or 9C.

FIG. 9B illustrates an operation, performed by a terminal, of performing a counter check procedure with respect to a radio bearer, according to an embodiment of the present disclosure.

When the terminal determines that a CounterCheck message is received from the base station, the terminal may check whether each DRB configured for the terminal through an RRCReconfiguration message is a DRB indicated in the corresponding CounterCheck message and may perform the procedure of FIG. 9B according to a DRB type.

Referring to FIG. 9B, the terminal may determine whether the DRB configured for the terminal is the DRB indicated in the CounterCheck message, in operation 941. When the DRB is determined to be the DRB indicated by the base station in operation 941, the terminal may configure count information with respect to the corresponding DRB in operation 943. The terminal may include the corresponding DRB and the count information with respect thereto in a configured CounterCheckResponse message in operation 945. Alternatively, the terminal may determine whether the DRB is a DRB not indicated in the CounterCheck message and corresponding to a PTP DRB in operation 947. When the terminal determines that the DRB is the PTP DRB, the terminal may configure count information with respect to the corresponding DRB in operation 949 and may proceed to operation 945 and may include the corresponding DRB and the count information with respect thereto in the configured CounterCheckResponse message. Alternatively, when the terminal determines that the DRB is a DRB not indicated in the CounterCheck message and corresponding to a PTM DRB, the terminal may proceed to operation 951 and may determine not to configure count information with respect to the corresponding PTM DRB.

After performing the procedure of FIG. 9B, the terminal may transmit the CounterCheckResponse message configured in operation 945 to the base station.

FIG. 9C illustrates an operation of a terminal performing a counter check procedure of a broadcasting service, according to an embodiment of the present disclosure.

When the terminal determines that the CounterCheck message is received from the base station, the terminal may check whether each DRB configured for the terminal through the RRCReconfiguration message is a DRB indicated in the corresponding CounterCheck message and may perform the procedure of FIG. 9C according to a DRB type.

Referring to FIG. 9C, the terminal may determine whether the DRB configured for the terminal is the DRB indicated in the CounterCheck message in operation 961. When it is determined in operation 961 that the DRB is the DRB indicated by the base station, the terminal may determine whether the corresponding DRB is a PTP DRB in operation 963, and when the DRB is determined to be the PTP DRB, the terminal may configure count information with respect to the corresponding DRB in operation 965. The terminal may further include the corresponding DRB and the count information with respect thereto in a configured CounterCheckResponse message in operation 967. Alternatively, based on the determining in operation 963, when it is determined that the DRB is a PTM DRB, the terminal may proceed to operation 969 and may determine not to configure count information with respect to the corresponding PTM DRB. Alternatively, the terminal may determine that the DRB configured for the terminal is a DRB not indicated in the CounterCheck message and corresponding to the PTP DRB, in operation 971. When it is determined that the DRB is the PTP DRB, the terminal may configure count information with respect to the corresponding DRB in operation 973 and may proceed to operation 967 and may include the corresponding DRB and the count information with respect thereto in the configured CounterCheckResponse message. Alternatively, when it is determined that the DRB configured for the terminal is a DRB not indicated in the CounterCheck message and corresponding to the PTM DRB, the terminal may proceed to operation 975 and may determine not to configure count information with respect to the corresponding PTM DRB.

After performing the procedure of FIG. 9C, the terminal may transmit the CounterCheckResponse message configured in operation 967 to the base station.

The methods according to embodiments as described in the specification or in the following claims of the present disclosure may be implemented as hardware, software, or a combination of hardware and software.

When the electrical structures and methods are implemented in software, a computer-readable recording medium having one or more programs (software modules) recorded thereon may be provided. One or more programs stored in the computer-readable storage medium are configured to be executable by one or more processors in an electronic device. The one or more programs may include instructions for the electronic device to execute the methods according to the embodiments of the present disclosure described in the claims and the specification.

The programs (software modules or software) may be stored in non-volatile memories including random-access memory (RAM), flash memory, etc., read-only memory (ROM), electrically erasable programmable ROM (EEPROM), a magnetic disc storage device, compact disc (CD)-ROM, digital versatile discs (DVDs), other optical storage devices, or magnetic cassettes. Alternatively, the programs may be stored in a memory composed of part or all of the memories described above. Also, each of the memories included in the memory may be provided in a multiple number.

Also, the programs may be stored in an attachable storage device, which may be accessed through a communication network, such as the Internet, the Intranet, a local area network (LAN), a wide LAN (WLAN), or a storage area network (SAN), or through a communication network combining the communication networks described above. The storage device may access a device configured to perform the embodiment of the present disclosure through an external port. Furthermore, a separate storage device on the communication network may access the electronic device performing the embodiments of the present disclosure.

In the afore-described embodiments of the present disclosure, elements included in the present disclosure are expressed in a singular or plural form according to the embodiments of the present disclosure. However, the singular term or the plural term may be appropriately selected according to situations that are provided, for convenience of explanation. The present disclosure is not limited to the singular components or the plural components. A component referred to by the plural term may be configured as a single component, and a component referred to by the singular term may be configured as a plurality of component.

## Claims

1. A method performed by a user equipment, UE, the method comprising:
transmitting (705), to a base station, BS, multicast broadcast service, MBS, information of interest of the UE via radio resource control, RRC, signaling;
receiving (711), from the BS, an RRC reconfiguration message including information regarding at least one data radio bearer, DRB, for an MBS, wherein the information regarding the at least one DRB for the MBS includes temporary mobile group identity, TMGI, related with the at least one DRB for the MBS; and
configuring the at least one DRB for the MBS based on the information regarding the at least one DRB for the MBS,
wherein, the MBS information of the interest of the UE includes priority information indicating whether the UE priorities broadcast reception above unicast reception, and a list of MBS broadcast services which the UE is interested to receive.

2. The method of claim 1, wherein the list of MBS broadcast services includes TMGI information related with at least one MBS which the UE is interested to receive, wherein the TMGI information includes at least one public land mobile network, PLMN, identifier related with the at least one MBS.

3. A method performed by a base station, BS, the method comprising:
receiving (705) from a user equipment, UE, multicast broadcast service, MBS, information of interest of the UE via radio resource control, RRC, signaling; and
transmitting (711), to the UE, an RRC reconfiguration message including information regarding at least one data radio bearer, DRB, for an MBS, wherein the information regarding the at least one DRB for the MBS includes temporary mobile group identity, TMGI, related with the at least one DRB for the MBS,
wherein the MBS information of the interest of the UE includes priority information indicating whether the UE priorities broadcast reception above unicast reception, and a list of MBS broadcast services which the UE is interested to receive.

4. The method of claim 3, wherein the list of MBS broadcast services includes TMGI information related with at least one MBS which the UE is interested to receive, wherein the TMGI information includes at least one public land mobile network, PLMN, identifier related with the at least one MBS.

5. A user equipment, UE, in a wireless communication system, the UE comprising:
a transceiver configured to transmit or receive a signal to or from a base station, BS;
a memory storing a program and data for repetitive transmission of control information by the UE; and
a processor configured to execute the program stored in the memory to:
transmit, to a base station, BS, multicast broadcast service, MBS, information of interest of the UE via radio resource control, RRC, signaling;
receive, from the BS, an RRC reconfiguration message including information regarding at least one data radio bearer, DRB, for an MBS, wherein the information regarding the at least one DRB for the MBS includes temporary mobile group identity, TMGI, related with the at least one DRB for the MBS; and
configure the at least one DRB for the MBS based on the information regarding the at least one DRB for the MBS,
wherein, the MBS information of the interest of the UE includes priority information indicating whether the UE priorities broadcast reception above unicast reception, and a list of MBS broadcast services which the UE is interested to receive.

6. The UE of claim 5, wherein the list of MBS broadcast services includes TMGI information related with at least one MBS which the UE is interested to receive, wherein the TMGI information includes at least one public land mobile network, PLMN, identifier related with the at least one MBS.

7. A base station, BS, in a wireless communication system, the BS comprising:
a transceiver configured to transmit or receive a signal to or from a user equipment, UE;
a memory storing a program and data for repetitive transmission of control information by the BS; and
a processor configured to execute the program stored in the memory to:
receive, from a user equipment, UE, multicast broadcast service, MBS, information of interest of the UE via radio resource control, RRC, signaling; and
transmit, to the UE, an RRC reconfiguration message including information regarding at least one data radio bearer, DRB, for an MBS, wherein the information regarding the at least one DRB for the MBS includes temporary mobile group identity, TMGI, related with the at least one DRB for the MBS,
wherein, the MBS information of the interest of the UE includes priority information indicating whether the UE priorities broadcast reception above unicast reception, and a list of MBS broadcast services which the UE is interested to receive.

8. The BS of claim 7, wherein the list of MBS broadcast services includes TMGI information related with at least one MBS which the UE is interested to receive, wherein the TMGI information includes at least a public land mobile network, PLMN, identifier related with the at least one MBS.

## Patentansprüche

1. Verfahren, das von einem Benutzergerät, UE, ausgeführt wird, wobei das Verfahren Folgendes umfasst:
Übertragen (705) von Multicast-Rundfunkdienst(MBS)-Informationen, die für das UE von Interesse sind, über Radio Resource Control(RRC)-Signalisierung an eine Basisstation, BS;
Empfangen (711) einer RRC-Neukonfigurationsnachricht, die Informationen bezüglich mindestens eines Datenfunkträgers, DRB, für einen MBS enthält, von der BS, wobei die Informationen bezüglich des mindestens einen DRB für den MBS eine temporäre mobile Gruppenidentität, TMGI, enthalten, die mit dem mindestens einen DRB für den MBS in Zusammenhang steht; und
Konfigurieren des mindestens einen DRB für den MBS basierend auf den Informationen bezüglich des mindestens einen DRB für den MBS,
wobei die für das UE interessanten MBS-Informationen Prioritätsinformationen, die anzeigen, ob das UE dem Rundfunkempfang Vorrang vor dem Unicast-Empfag einräumt, und eine Liste von MBS-Rundfunkdiensten enthalten, an deren Empfang das UE interessiert ist.

2. Verfahren nach Anspruch 1, wobei die Liste von MBS-Rundfunkdiensten TMGI-Informationen enthält, die mit mindestens einem MBS in Zusammenhang stehen, an dessen Empfang das UE interessiert ist, wobei die TMGI-Informationen mindestens eine PLMN(öffentliches terrestrisches Mobilfunknetz)-Kennung enthalten, die mit dem mindestens einen MBS in Zusammenhang steht.

3. Verfahren, das von einer Basisstation, BS, ausgeführt wird, wobei das Verfahren Folgendes umfasst:
Empfangen (705) von Multicast-Rundfunkdienst(MBS)-Informationen, die für das UE von Interesse sind, über Radio Resource Control(RRC)-Signalisierung von einem Benutzergerät, UE; und
Übertragen (711) einer RRC-Neukonfigurationsnachricht, die Informationen bezüglich mindestens eines Datenfunkträgers, DRB, für einen MBS enthält, an das UE, wobei die Informationen bezüglich des mindestens einen DRB für den MBS eine temporäre mobile Gruppenidentität, TMGI, enthalten, die mit dem mindestens einen DRB für den MBS in Zusammenhang steht,
wobei die für das UE interessanten MBS-Informationen Prioritätsinformationen, die anzeigen, ob das UE dem Rundfunkempfang Vorrang vor dem Unicast-Empfang einräumt, und eine Liste von MBS-Rundfunkdiensten enthalten, an deren Empfang das UE interessiert ist.

4. Verfahren nach Anspruch 3, wobei die Liste von MBS-Rundfunkdiensten TMGI-Informationen enthält, die mit mindestens einem MBS in Zusammenhang stehen, an dessen Empfang das UE interessiert, wobei die TMGI-Informationen mindestens eine PLMN(öffentliches terrestrisches Mobilfunknetz)-Kennung enthalten, die mit dem mindestens einen MBS in Zusammenhang steht.

5. Benutzergerät, UE, in einem drahtlosen Kommunikationssystem, wobei das UE Folgendes umfasst:
einen Transceiver, der zum Übertragen oder Empfangen eines Signals an oder von einer Basisstation, BS, konfiguriert ist;
einen Speicher, der ein Programm und Daten für die wiederholte Übertragung von Steuerungsinformationen durch das UE speichert; und
einen Prozessor, der so konfiguriert ist, dass er das in dem Speicher gespeicherte Programm zu Folgendem ausführt:
Übertragen von Multicast-Rundfunkdienst(MBS)-Informationen, die für das UE von Interesse sind, über Radio Resource Control(RRC)-Signalisierung an eine Basisstation, BS;
Empfangen einer RRC-Neukonfigurationsnachricht, die Informationen bezüglich mindestens eines Datenfunkträgers, DRB, für einen MBS enthält, von der BS, wobei die Informationen bezüglich des mindestens einen DRB für den MBS eine temporäre mobile Gruppenidentität, TMGI, enthalten, die mit dem mindestens einen DRB für den MBS in Zusammenhang steht; und
Konfigurieren des mindestens einen DRB für den MBS basierend auf den Informationen bezüglich des mindestens einen DRB für den MBS,
wobei die für das UE interessanten MBS-Informationen Prioritätsinformationen, die anzeigen, ob das UE dem Rundfunkempfang Vorrang vor dem Unicast-Empfang einräumt, und eine Liste von MBS-Rundfunkdiensten enthalten, an deren Empfang das UE interessiert ist.

6. UE nach Anspruch 5, wobei die Liste von MBS-Rundfunkdiensten TMGI-Informationen enthält, die mit mindestens einem MBS in Zusammenhang stehen, an dessen Empfang das UE interessiert ist, wobei die TMGI-Informationen mindestens eine PLMN(öffentliches terrestrisches Mobilfunknetz)-Kennung enthalten, die mit dem mindestens einen MBS in Zusammenhang steht.

7. Basisstation, BS, in einem drahtlosen Kommunikationssystem, wobei die BS Folgendes umfasst:
einen Transceiver, der zum Übertragen oder Empfangen eines Signals an oder von einem Benutzergerät, UE, konfiguriert ist;
einen Speicher, der ein Programm und Daten für die wiederholte Übertragung von Steuerungsinformationen durch die BS speichert; und
einen Prozessor, der so konfiguriert ist, dass er das in dem Speicher gespeicherte Programm zu Folgendem ausführt:
Empfangen von Multicast-Rundfunkdienst(MBS)-Informationen, die für das UE von Interesse sind, über Radio Resource Control(RRC)-Signalisierung von einem Benutzergerät, UE; und
Übertragen einer RRC-Neukonfigurationsnachricht, die Informationen bezüglich mindestens eines Datenfunkträgers, DRB, für einen MBS enthält, an das UE, wobei die Informationen bezüglich des mindestens einen DRB für den MBS eine temporäre mobile Gruppenidentität, TMGI, enthalten, die mit dem mindestens einen DRB für den MBS in Zusammenhang steht,
wobei die für das UE interessanten MBS-Informationen Prioritätsinformationen, die anzeigen, ob das UE dem Rundfunkempfang Vorrang vor dem Unicast-Empfang einräumt, und eine Liste von MBS-Rundfunkdiensten enthalten, an deren Empfang das UE interessiert ist.

8. BS nach Anspruch 7, wobei die Liste von MBS-Rundfunkdiensten TMGI-Informationen enthält, die mit mindestens einem MBS in Zusammenhang stehen, an dessen Empfang das UE interessiert ist, wobei die TMGI-Informationen mindestens eine PLMN(öffentliches terrestrisches Mobilfunknetz)-Kennung enthalten, die mit dem mindestens einen MBS in Zusammenhang steht.

## Revendications

1. Procédé effectué par un équipement utilisateur, UE, le procédé comprenant :
transmettre (705), à une station de base, BS, des informations de service de diffusion multidiffusion, MBS, d'intérêt de l'UE via une signalisation de contrôle de ressources radio, RRC ;
recevoir (711), de la BS, un message de reconfiguration de RRC incluant des informations concernant au moins un support radio de données, DRB, pour un MBS, où les informations concernant l'au moins un DRB pour le MBS incluent une identité de groupe mobile temporaire, TMGI, liée à l'au moins un DRB pour le MBS ; et
configurer l'au moins un DRB pour le MBS sur la base des informations concernant l'au moins un DRB pour le MBS,
où les informations MBS de l'intérêt de l'UE incluent des informations de priorité indiquant si l'UE donne priorité à une réception de diffusion par rapport à une réception en monodiffusion, et une liste de services de diffusion MBS que l'UE est intéressé de recevoir.

2. Procédé selon la revendication 1, où la liste de services de diffusion MBS inclut des informations TMGI liées à au moins un MBS que l'UE est intéressé de recevoir, où les informations TMGI incluent au moins un identifiant de réseau mobile terrestre public, PLMN, lié à l'au moins un MBS.

3. Procédé effectué par une station de base, BS, le procédé comprenant :
recevoir (705) d'un équipement utilisateur, UE, des informations d'intérêt de service de diffusion multidiffusion, MBS, de l'UE via une signalisation de contrôle de ressources radio, RRC ; et
transmettre (711), à l'UE, un message de reconfiguration RRC incluant des informations concernant au moins un support radio de données, DRB, pour un MBS, où les informations concernant l'au moins un DRB pour le MBS incluent une identité de groupe mobile temporaire, TMGI, liée à l'au moins un DRB pour le MBS,
où les informations MBS de l'intérêt de l'UE incluent des informations de priorité indiquant si l'UE donne priorité à une réception de diffusion par rapport à une réception en monodiffusion, et une liste de services de diffusion MBS que l'UE est intéressé de recevoir.

4. Procédé selon la revendication 3, où la liste de services de diffusion MBS inclut des informations TMGI liées à au moins un MBS que l'UE est intéressé de recevoir, où les informations TMGI incluent au moins un identifiant de réseau mobile terrestre public, PLMN, lié à l'au moins un MBS.

5. Équipement utilisateur, UE, dans un système de communication sans fil, l'UE comprenant :
un émetteur-récepteur configuré pour transmettre ou recevoir un signal vers ou depuis une station de base (BS);
une mémoire stockant un programme et des données pour une transmission répétitive d'informations de contrôle par l'UE ; et
un processeur configuré pour exécuter le programme stocké dans la mémoire pour :
transmettre, à une station de base, BS, des informations d'intérêt de service de diffusion multidiffusion, MBS, de l'UE via une signalisation de contrôle de ressources radio, RRC ;
recevoir, de la BS, un message de reconfiguration RRC incluant des informations concernant au moins un support radio de données, DRB, pour un MBS, où les informations concernant l'au moins un DRB pour le MBS incluent une identité de groupe mobile temporaire, TMGI, liée à l'au moins un DRB pour le MBS ; et
configurer l'au moins un DRB pour le MBS sur la base des informations concernant l'au moins un DRB pour le MBS,
où les informations MBS de l'intérêt de l'UE incluent des informations de priorité indiquant si l'UE donne priorité à une réception de diffusion par rapport à une réception en monodiffusion, et une liste de services de diffusion MBS que l'UE est intéressé de recevoir.

6. UE selon la revendication 5, où la liste de services de diffusion MBS inclut des informations TMGI liées à au moins un MBS que l'UE est intéressé de recevoir, où les informations TMGI incluent au moins un identifiant de réseau mobile terrestre public, PLMN, lié à l'au moins un MBS.

7. Station de base, BS, dans un système de communication sans fil, la BS comprenant :
un émetteur-récepteur configuré pour transmettre ou recevoir un signal vers ou depuis un équipement utilisateur, UE ;
une mémoire stockant un programme et des données pour une transmission répétitive d'informations de contrôle par la BS ; et
un processeur configuré pour exécuter le programme stocké dans la mémoire pour :
recevoir, d'un équipement utilisateur, UE, des informations d'intérêt de service de diffusion multidiffusion, MBS, de l'UE via une signalisation de contrôle de ressources radio, RRC ; et
transmettre, à l'UE, un message de reconfiguration RRC incluant des informations concernant au moins un support radio de données, DRB, pour un MBS, où les informations concernant l'au moins un DRB pour le MBS incluent une identité de groupe mobile temporaire, TMGI, liée à l'au moins un DRB pour le MBS,
où les informations MBS de l'intérêt de l'UE incluent des informations de priorité indiquant si l'UE donne priorité à une réception de diffusion par rapport à une réception en monodiffusion, et une liste de services de diffusion MBS que l'UE est intéressé de recevoir.

8. BS selon la revendication 7, où la liste de services de diffusion MBS inclut des informations TMGI liées à au moins un MBS que l'UE est intéressé de recevoir, où les informations TMGI incluent au moins un identifiant de réseau mobile terrestre public, PLMN, lié à l'au moins un MBS.
